**Europäisches Patentamt**

**European Patent Office**

**Office européen des brevets**

(19)

(11) Veröffentlichungsnummer: **0 000 420**
**B1**

(12) **EUROPÄISCHE PATENTSCHRIFT**

(45) Veröffentlichungstag der Patentschrift:
**30.12.81**

(51) Int. Cl.³: **C 03 C 17/32**, B 65 D 23/08

(21) Anmeldenummer: **78200095.4**

(22) Anmeldetag: **13.07.78**

(54) **Verfahren zum Beschichten von Glasoberflächen.**

(30) Priorität: **14.07.77 DE 2731776**

(43) Veröffentlichungstag der Anmeldung:
**24.01.79 Patentblatt 79/2**

(45) Bekanntmachung des Hinweises auf die Patenterteilung:
**30.12.81 Patentblatt 81/52**

(84) Benannte Vertragsstaaten:
**BE CH DE FR GB LU NL**

(56) Entgegenhaltungen:
**DE-A-2 364 157**
**DE-A-2 732 062**
**FR-A-1 426 058**
**US-A-4 035 548**

(73) Patentinhaber: **CHEMISCHE WERKE HÜLS AG,**
**Postfach 1320, D-4370 Marl 1 (DE)**

(72) Erfinder: **Gras, Rainer, Dr., An der Ziegelei 91,**
**D-4690 Herne 2 (DE)**
Erfinder: **Schnurbusch, Horst, Dr., Overwegstrasse 36,**
**D-4690 Herne 1 (DE)**

(74) Vertreter: **Stell, Hanna, Dipl.-Chem. et al, RSP**
**PATENTE-PB 40 Holsterhauser**
**Strasse 160 Postfach 2840, D-4690 Herne 2 (DE)**

## Verfahren zum Beschichten von Glasoberflächen

Das Überziehen von Glasoberflächen, insbesondere Glasflaschen mit einer festhaftenden, einheitlichen und transparenten Kunststoffschicht verleiht diesen Flaschen beim Einsatz für kohlensäurehaltige Getränke, wie Bier, Coca-Cola, Mineralwasser, Fruchtsaftgetränke usw. eine ausserordentliche Sicherheit und verlängert bei der Mehrwegflasche die Gebrauchsdauer. Infolge Schlag- und Stosseinwirkung, aber auch durch Erhitzen im Sonnenlicht oder anderen Wärmequellen, ist es nämlich in der Vergangenheit häufig zu Explosionen ungeschützter Flaschen gekommen, die verschiedentlich schwere körperliche Verletzungen, insbesondere Augenverletzungen, bei Menschen hervorgerufen haben.

Einige der bisher bekannten Beschichtungen für diesen Zweck besitzen den Nachteil, dass sich die Überzugsschicht bei wiederholter Reinigung eintrübt, was bei thermoplastischen Materialien möglicherweise auf einen Nachkristallisationseffekt des Kunststoffs zurückzuführen ist. Derartige Flaschen vermitteln optisch einen negativen Eindruck und sind daher verkaufspsychologisch unerwünscht. Der Nachteil von duroplastischen, äthergruppenenthaltenden Kunststoffüberzügen liegt in der oxidativen Anfälligkeit begründet, was zum Verspröden der Schutzschicht führt und somit, insbesondere bei Mehrwegflaschen, nach einiger Zeit den Splitterschutz nicht mehr gewährleistet.

Es ist bereits lange bekannt, Glasflaschen z. B. Glasflakons, die man beschichten will, vor der eigentlichen Beschichtung mit einer Lösung von Silanen zu behandeln, da diese als Haftvermittler zwischen Glasfläche und Beschichtung dienen. Verwiesen wird hierzu auf FR-A-1 426 058, wobei dort zur Beschichtung eine Mischung aus nichtveresterten Epoxyharzen und polymeren Methylacrylat eingesetzt wird.

Des weiteren ist es gemäss DE-A-2 364 157 bekannt, Glasflaschen mittels Polyurethan in einem Einkomponentenverfahren zu beschichten, wobei die Isocyanatkomponente in blockierter Form eingesetzt wird. Als Hydroxyl- bzw. Amin-Komponente werden lediglich Guanamine oder Bisphenol-A, – beide bisfunktionell – oder Melamin verwendet.

Melamin ist zwar trifunktionell, sein Zusatz führt aber wegen Sublimation zu Umweltverschmutzungen sowie zur Eintrübung.

Schliesslich ist gemäss US-A-4 035 548 auch eine PUR-Beschichtung zwischen zwei Glasflächen bekannt, die allerdings naturgemäss keine Waschbeständigkeit aufweisen muss, d.h. die Beanspruchung ist gering. Es werden nur lineare bifunktionelle Verbindungen als Hydroxylkomponente eingesetzt.

Es wurde nun gefunden, dass man Glasoberflächen auch ohne die eingangs geschilderten Nachteile beschichten kann, wenn man das Verfahren zum Beschichten von insbesondere Glasflaschen zur Verhinderung der Streuung von Glaspartikeln beim Bersten, mit einer transparenten, duroplastischen Schutzschicht von mehr als 50 $\mu$m durch Auftragen von Massen aus Polyisocyanaten und hydroxylgruppenhaltigen Verbindungen sowie üblicher Verarbeitungszusätze und Aushärten des Überzuges bei erhöhten Temperaturen so ausführt, dass man zunächst die reine Glasoberfläche mit einer wässrigen oder alkoholischen Silanschlichte behandelt und trocknet, und dass man anschliessend die so behandelte Glasoberfläche mit einer Masse aus aliphatischen und/oder cycloaliphatischen Diisocyanaten oder deren Umsetzungsprodukte mit Wasser im Molverhältnis von 2 : $\leqq$ 1 und einem trifunktionellen, hydroxylgruppenhaltigen Polyester eines mittleren Molekulargewichtes von 300–1400 aus $\omega$-Hydroxycarbonsäuren oder deren Lactonen mit mindestens 4 C-Atomen und Triolen beschichtet und härtet, wobei gegebenenfalls bis zu 90 Gew.-% des trifunktionellen Polyesters durch einen bifunktionellen Polyester gleichen Aufbaus aus Diolen mit einem mittleren Molekulargewicht von 400–2000 ersetzt sein können.

Vorzugsweise haben die trifunktionellen Polyester ein mittleres Molekulargewicht von 500–800 und die bifunktionellen Polyester ein mittleres Molekulargewicht von 500–1200.

Die auf diese Weise applizierte Kunststoffschutzschicht ist hochelastisch und zeigt eine ausgezeichnete Haftung, so dass beim Glasbruch oder dem Bersten der Flasche die Glassplitter innerhalb der Schutzschicht verbleiben. Nach der Zerstörung der Glasflasche bleibt die Flaschenform vollständig erhalten. Die auftretende kinetische Energie wird durch Streckung und Erwärmung des Kunststoffüberzugs umgesetzt.

Von besonderem Vorteil ist die Beständigkeit der Beschichtung gegenüber heissen, alkalihaltigen Spüllaugen, in denen die Flaschen vor dem Abfüllen der Getränke gereinigt werden. Dieses trifft in besonderem Masse für Mehrwegflaschen zu, die vor jedem Füllvorgang einer intensiven Reinigung unterzogen werden.

Der Vorteil der erfindungsgemässen Beschichtung liegt darin, dass auch nach wiederholtem Spülen in der heissen, alkalischen Waschlauge keine Verluste der mechanischen Kenndaten und keinerlei Haftungsverlust auftreten. Die mit einem derartigen Kunststoffüberzug versehenen Glasflaschen können ohne Bedenken als Behälter für kohlensäurehaltige Getränke verwendet werden, da keine Gefahr beim Zubruchgehen oder Zerplatzen für den Menschen mehr auftreten kann.

Bei ihrer Verwendung als Mehrwegflasche ist die Gebrauchsdauer einer beschichteten Flasche wesentlich länger als die der unbeschichteten Flasche, die infolge der Bewegungsabläufe durch Gegeneinanderreiben an scharfen Kanten und Spülvorgängen in heissen Lösungen oberflächenmässig stark beansprucht bzw. leicht beschädigt werden.

Zur Durchführung dieses Verfahrens wird die gereinigte Glasoberfläche beispielsweise einer Glasflasche zunächst mit einer wässrigen oder alkoholischen Silanschlichte behandelt. Für diese Behandlung werden Silane mit Resten verwendet, die zwei verschiedene Funktionsgruppen zuzuordnen sind. Dieses sind zum einen niedere Alkoxyreste, insbesondere Methoxy- und Äthoxyreste, die mit den OH-Gruppen der Glasoberfläche reagieren und zum anderen organische Reste mit solchen funktionellen Gruppen, die mit den Isocyanatgruppen reagieren können, wie Amino-, Epoxi-, Mercaptogruppen usw., z.B. $\gamma$-Aminopropyl-trimethoxysilan, Glycidyloxypropyl-triäthoxysilan, $\gamma$-Mercaptopropyltrimethoxysilan, $\gamma$-Mercaptopropyltriäthoxysilan usw. Die Behandlung der Glasoberfläche kann beispielsweise durch Tauchen oder Besprühen mit dem Schlichtemittel erfolgen. Die so behandelten Flaschen können entweder separat bei 25–100°C getrocknet werden oder die Trocknung erfolgt durch das Erwärmen der Glasflasche auf 80–100°C, d.h. auf eine Temperatur, wie sie bei der Flaschenherstellung im Laufe des Abkühlprozesses auftritt.

Die Applikation der nachfolgend beschriebenen lösungsmittelfreien PUR-Zweikomponentenbeschichtungsmassen auf die so vorbehandelten, vorgewärmten Glasflaschen erfolgt nach bekannten Verfahren, wie Giessen, Spritzen, Tauchen u.ä.

Die Wärmezufuhr kann nach der Applikation der Beschichtungsmaterialien bis zur vollständigen Reaktion fortgesetzt werden, wenn die vorhandene Wärmekapazität zur Härtung selbst nicht ausreichen sollte.

Die so beschichtete Glasflasche wird dann der eigentlichen Härtung bei einer Temperatur im Bereich von 150–240°C, vorzugsweise 180–210°C unterworfen.

Zur Herstellung der Beschichtung eignen sich beispielsweise aliphatische und/oder cycloaliphatische Diisocyanate, wie sie beispielsweise in dem Artikel von W. Siefken in Justus Liebigs Annalen der Chemie 562, Seiten 75–136, beschrieben sind, wie Äthylendiisocyanat-1,2, Tetramethylendiisocyanat-1,4, Hexamethylendiisocyanat-1,6, 2,2,4- bzw. 2,4,4-Trimethylhexamethylendiisocyanat-1,6 (TMDI), Dodecandiisocyanat-1,12,$\omega$,$\omega'$-Diisocyanatodipropyläther, Lysindiisocyanat, Cyclobutan-1,3-diisocyanat, Cyclohexan-1,3 und 1,4-diisocyanat, 3-Isocyanatomethyl-3,5,5-trimethylcyclohexylisocyanat, welches auch als Isophorondiisocyanat bezeichnet und mit IPDI abgekürzt wird, Decahydro-8-methyl (1,4-methanoaphthalen-2 (oder 3) 5-ylendimethylendiisocyanat, Decahydro-4,7-methanoindan-1 (oder 2) 5 (oder 6) ylendimethylendiisocyanat, Hexahydro-4,7-methanindan-1- (oder 2) 5 (oder 6)-ylendiisocyanat, Hexahydrotoluylendiisocyanat, Perhydro-2,4'- und/oder -4,4'-diphenylmethandiisocyanat sowie beliebige Gemische der Isomeren. Weitere geeignete Isocyanate werden in dem genannten Artikel in den Annalen auf Seite 122f. beschrieben. Selbstverständlich können auch Mischungen der Isocyanate eingesetzt werden. Es eignen sich weiter die Umsetzungsprodukte dieser Diisocyanate mit Wasser im Molverhältnis von 2:$\leqq$1, insbesondere das in der DT-OS 2 341 065 beschriebene.

Die Umsetzung des Polyesters mit dem Diisocyanat erfolgt in solchen Mengen, dass auf 1 OH-Gruppe 0,8–1,2, vorzugsweise 0,95–1,1 Isocyanatgruppen kommen.

Zur Herstellung der lösungsmittelfreien PUR-Zweikomponentenbeschichtungen eignen sich besonders trifunktionelle, hydroxylgruppenhaltige Polyester aus $\omega$-Hydroxycarbonsäuren oder deren Lactonen, wobei unter trifunktionellen Polyester solche mit 3 OH-Gruppen verstanden werden. Das Molekulargewicht der Polyester sollte in dem angegebenen Bereich liegen. Die Hydroxycarbonsäure oder deren Lactone haben mindestens 4 C-Atome in der Kette. Als obere Grenze können solche mit 7 C-Atomen verwendet werden. Typische Beispiele für geeignete Lactone sind: $\gamma$-Butyrolacton, $\alpha$-Valerolacton, $\varepsilon$-Caprolacton, Methyl-$\varepsilon$-caprolacton u.ä.

Die Herstellung dieser Lactonpolyesterpolyole kann in bekannter Weise nach einem in den US-A-2 890 208, 2 977 885 oder 2 933 478 beschriebenen Verfahren erfolgen, in denen man Triole als Initiator mit den Lactonen unter Erhitzen mit oder ohne Katalysator umsetzt. Geeignete Triole sind beispielsweise Glycerin, Trimethylolpropan, Trimethyloläthan, Triäthan lamin u.ä. Anstelle der Lactone können auch aus den entsprechenden $\omega$-Hydroxycarbonsäuren und Triolen nach bekannten Verfahren die erfindungsgemäss einsetzbaren hydroxylgruppenhaltigen Polyester hergestellt werden.

Erfindungsgemäss können bis zu 90 Gew.-% des trifunktionellen Polyesters auch durch bifunktionelle ersetzt werden, d.h. solche mit 2 OH-Gruppen. Diese können auch entsprechend den in den genannten US-Patentschriften beschriebenen Verfahren hergestellt werden. Als Initiatoren werden in diesem Fall Diole verwendet, wie Äthylenglykol, Neopentylglykol, Propylenglykol-1,2 und -1,3, Butandiol-1,4 und -1,3 Hexandiol-1,6, Diäthylenglykol, Triäthylenglykol u.ä.

Erfindungsgemäss wurden insbesondere Mischungen der tri- und bifunktionellen, hydroxylgruppenhaltigen Polyester untersucht, wobei das Mischungsverhältnis zwischen 90:10 und 10:90, vorzugsweise 80:20 bis 40:60 lag. Diese Zahlenangaben sind Gewichtsprozente.

Die Reaktion zwischen Polyisocyanat und hydroxylgruppenhaltigen Polyester kann durch Katalysatoren in Gang gesetzt bzw. beschleunigt werden. Geeignet sind: metallorganische Verbindungen, wie Zinn- und Zinkoctoat, Di-n-butylzinndilaurat, Di-n-butylzinndiacetat usw.

Zur Verbesserung der Verlaufeigenschaften der Überzüge werden bei der Zubereitung sogenannte Verlaufmittel zugesetzt. Bei diesen Mitteln kann es sich um chemische Verbindungen bzw. deren Gemische unterschiedlicher chemischer Art handeln, z.B. polymere oder monomere Verbindungen, z.B. Acetale, Äther, Mischpolymerisate aus n-Butylacrylat und Vinylisobutyläther, Siliconharze, fluorierte Alkylester etc. Derartige Verlaufmittel können den Formulierungen in Mengen von 0,05–0,5 Gew.-% bezogen auf den Gesamtansatz zugesetzt werden.

Die Beschichtungsmasse kann auch gebräuchliche Zusätze, wie in den Polyolen lösliche Farbstoffe, Stabilisatoren, Entschäumer usw. enthalten. Diese können, bezogen auf Bindemittel – Polyol, Isocyanat – innerhalb eines weiten Bereichs schwanken. Die Menge richtet sich nach den Anforderungen an die Qualität der Überzüge.

Vor der Applikation der Beschichtungsmassen werden die Komponenten A und B innig gemischt und solange evakuiert, bis keine Blasen mehr aufsteigen. Falls erforderlich muss der Mischungs- und Entgasungsvorgang je nach Viskosität bei erhöhter Temperatur durchgeführt werden.

Die Schichtdicken der ausgehärteten Überzüge können je nach Beanspruchung der Glasoberfläche oder Glasflaschen zwischen 50 und 250 $\mu$m schwanken.

Gegenstand der Erfindung sind weiter die gemäss den vorstehend beschriebenen Verfahren beschichtete Gläser, insbesondere Glasflaschen.

Die in den Beispielen genannten mechanischen Kenndaten von PUR-Flaschenbeschichtungen wurden nach folgenden Methoden bestimmt:

Zugfestigkeit
Dehnung     } gemäss DIN 53 455
$\sigma_{100}$-Spannung

Ausserdem wurden Testfolien folgenden Stabilitätsprüfungen unterworfen:

Waschlaugentest:    4gewichtsprozentige NaOH, 0,4gewichtsprozentige Na-glyconat, 1 Zyklus: 30 Minuten/80°C
Tropentest:    70°C/100% rel. LF
Sterilisation:    121°C/2h

Weiterhin wurden Haftung und Splitterschutz getestet. Der Splitterschutz wurde in einem sog. Falltest geprüft. Zu diesem Zweck wurde in eine beschichtete 0,7 l Getränkeflasche 6,3 g $H_2SO_4$ (98gewichtsprozentig) und 9 g $NAHCO_3$ gegeben und verschlossen. Die entstehende $CO_2$-Menge erzeugt bei 25°C einen Innendruck von ca. 500 kPa (4,0 atü). Die so vorbereitete Testflasche wurde aus einer Höhe von 1,2 m auf eine Betonplatte fallen gelassen und die Streuung der Glassplitter beobachtet.

Beschreibung der in den Beispielen verwendeten Ausgangssubstanzen:

1. Komponente A (hydroxylgruppenhaltiger Polyester):

Als mehrwertige, hydroxylgruppenhaltige Polyester wurden die Polycaprolactone der Fa. Union Carbide eingesetzt, und zwar die bifunktionellen Typen auf Basis von Diäthylenglykol und $\varepsilon$-Caprolacton.

Polyester $A_1$:    mit der Hydroxylzahl von 212 mg KOH/g einer Säurezahl von 0,3 mg KOH/g und einem mittleren Molekulargewicht von 530

Polyester $A_2$:    mit einer Hydroxylzahl von 135 mg KOH/g einer Säurezahl von 0,3 mg KOH/g und einem mittleren Molekulargewicht von 830

und die trifunktionelle Type auf Basis von 1,1,1-Trimethylopropan und $\varepsilon$-Caprolacton

Polyester $A_3$:    mit einer Hydroxylzahl von 310 mg KOH/g einer Säurezahl von 0,3 mg KOH/g und einem mittleren Molekulargewicht von 540.

Die mittleren Molekulargewichte dieser Polyester wurden aus der bestimmten Hydroxylzahl rechnerisch ermittelt.

2. Komponente B: (Diisocyanate)

Neben dem monomeren Isophorondiisocyanat (Härter $B_1$) wurden zwei in Isophorondiisocyanat gelöste Harnstoffaddukte, die gemäss der DE-OS 2 341 065 aus IPDI und Wasser hergestellt wurden verwendet, u.zw. das

IPDI-Addukt $B_2$:    mit einem NCO-Gehalt von 28,7 Gew.-%, einem Äquivalentgewicht von 146,3 und einer Viskosität bei 25°C von 8100 cP

IPDI-Addukt $B_3$:    mit einem NCO-Gehalt von 31,5 Gew.-% einem Äquivalentgewicht von 133,3 und einer Viskosität bei 25°C von 450 cP.

3. Beschichtungsmassen:

In jedem der nachstehenden Beispiele wurde zunächst die Komponente A, bestehend aus dem tri- und/oder bifunktionellen Polyester, Katalysator und Verlaufmittel bei 40–50°C am Dissolver homogenisiert und anschliessend so lange evakuiert, bis keine Blasen mehr aufstiegen. Danach wurde die Komponente B – der Härter – zugesetzt, gemischt und wiederum bis zur Blasenfreiheit evakuiert. Appliziert wurde das Beschichtungsmaterial zunächst auf unbehandelte, auf 80–100°C vorgewärmte Glasplatten, um Folien zur Ermittlung der mechanischen Kenndaten und für die Stabilitätsprüfungen wie Waschlaugen- und Tropentest sowie Sterilisation herzustellen. Für Haftungsversuche und Falltest wurden mit Silanschlichte vorbehandelte, auf 80–100°C vorgewärmte Glasplatten und -flaschen beschichtet.

Tabelle 1 zeigt Beispiele mechanischer Kenndaten von Polyolkombinationen in Verbindung mit IPDI, IPDI-Add. $B_2$ und $B_3$. Das OH/NCO-Verhältnis betrug 1:1. Die Härtung erfolgte durch 15minütiges Erhitzen auf 200°C.

Die Ergebnisse der Stabilitätsprüfungen – Waschlauge, Tropentest, Sterilisation – sind in Tabelle 3 zusammengefasst. Die Haftung der Beschichtungsmassen auf vorbehandelten Glasflaschen und -platten (auch nach 5 Zyklen Waschlaugentest) war ausgezeichnet. Der Splitterschutz war in den Rezepturen mit einer Dehnung von ca. >150% gewährleistet. Je geringer die Dehnung der Folien (siehe auch Vergleichsbeispiele), desto geringer ist auch der Splitterschutz, d.h. die Splitter der berstenden Glasflaschen sind bis in einen Umkreis von >2 m zu finden. Die gleiche Beobachtung wurde gemacht, wenn die Dehnung zwar >150% ist, jedoch die Zugfestigkeit in etwa <28 N/mm² betrug.

Tabelle 2 zeigt einige Beispiele mechanischer Kenndaten anderer Polyesterkombinationen in Verbindung mit IPDI, IPDI-Addukt $B_2$ und $B_3$. Das OH/NCO-Verhältnis betrug 1:1. Die Härtung erfolgte bei 200°C innerhalb von 15 Minuten.

Tabelle 1

| Beispiele | 1 | 2 | 3 | 4 | 5 | 6 | 7 | 8 | 9 | 10 | 11 |
|---|---|---|---|---|---|---|---|---|---|---|---|
| Komponente A | | | | | | | | | | | |
| Polyester $A_3$ | 516,38 | 464,49 | 482,39 | 462,2 | 417,5 | 433,81 | 405,48 | 367,93 | 381,68 | 346,03 | 326,1 |
| Polyester $A_2$ | 129,09 | 116,12 | 120,60 | 198,1 | 178,9 | 185,92 | 270,32 | 245,28 | 254,46 | 346,03 | 326,1 |
| Sn-octoat | 2,0 | 2,0 | 2,0 | 2,0 | 2,0 | 2,0 | 2,0 | 2,0 | 2,0 | 2,0 | 2,0 |
| handelsübliches Verlaufmittel auf Basis von Alkylestern perfluorierter Carbonsäuren | 1,0 | 1,0 | 1,0 | 1,0 | 1,0 | 1,0 | 1,0 | 1,0 | 1,0 | 1,0 | 1,0 |
| Komponente B | | | | | | | | | | | |
| IPDI $B_1$ | 351,53 | | | 336,7 | | | 321,2 | | | 304,94 | |
| IPDI-Addukt $B_2$ | | 416,39 | | | 400,6 | | | 383,79 | | | |
| IPDI-Addukt $B_3$ | | | 394,01 | | | 379,17 | | | 362,76 | | 344,8 |
| Mechanische Kenndaten | | | | | | | | | | | |
| Zugfestigkeit $N/mm^2$ | 32,0 | 39 | 38 | 30,5 | 36,0 | 35 | 24 | 32 | 28 | 18,5 | 19,5 |
| Dehnung % | 190 | 100 | 140 | 210 | 140 | 170 | 260 | 180 | 200 | 270 | 230 |

Tabelle 2

| Beispiel | 12 | 13 | 14 | 15 | 16 | 17 | 18 | 19 | 20 | 21 | 22 |
|---|---|---|---|---|---|---|---|---|---|---|---|
| Komponente A | | | | | | | | | | | |
| Polyester $A_3$ | 506,4 | 453,87 | 471,94 | 448,6 | 402,99 | 418,48 | 389,38 | 350,6 | 364,68 | 328,63 | 307,68 |
| Polyester $A_1$ | 126,6 | 113,46 | 117,99 | 192,3 | 172,71 | 179,35 | 259,58 | 233,73 | 243,12 | 328,63 | 307,68 |
| Sn-octoat | 2,0 | 2,0 | 2,0 | 2,0 | 2,0 | 2,0 | 2,0 | 2,0 | 2,0 | 2,0 | 2,0 |
| handelsübliches Verlaufmittel auf Basis von Alkylestern perfluorierter Carbonsäuren | 1,0 | 1,0 | 1,0 | 1,0 | 1,0 | 1,0 | 1,0 | 1,0 | 1,0 | 1,0 | 1,0 |
| Komponente B | | | | | | | | | | | |
| IPDI | 364 | | | 356,1 | | | 348,04 | | | 339,74 | |
| IPDI-Addukt $B_2$ | | 429,67 | | | 421,3 | | | 412,67 | | | |
| IPDI-Addukt $B_2$ | | | 407,07 | | | 399,17 | | | 391,1 | | 381,64 |
| Mechanische Kenndaten | | | | | | | | | | | |
| Zugfestigkeit $N/mm^2$ | 35,0 | 42,5 | 42,0 | 31,5 | 40,5 | 39,0 | 25,5 | 36,0 | 35,0 | 22 | 24,5 |
| Dehnung % | 170 | 85 | 120 | 190 | 120 | 160 | 220 | 150 | 180 | 240 | 215 |

Tabelle 3

| Beispiel | | | 1 | 4 | 6 | 8 | 12 | 15 | 17 | 20 |
|---|---|---|---|---|---|---|---|---|---|---|
| **Waschlaugentest** | | | | | | | | | | |
| vor dem | Zugfestigkeit $\sigma_B$ | N/mm² | 31,5 | 30 | 34,5 | 31,0 | 35 | 32,5 | 38,5 | 34,0 |
| Test | Dehnung $\varepsilon_B$ | % | 185 | 205 | 170 | 185 | 180 | 190 | 165 | 185 |
| | $\sigma_{100}$-Spannung $\sigma_{100}$ | N/mm² | 14,5 | 14 | 16 | 15,5 | 16 | 14,5 | 19 | 15,0 |
| nach dem | $\sigma_B$   n. 5. Zyklus | N/mm² | 24 | 24,5 | 26 | 25 | 27 | 21,5 | 26 | 26 |
| Test | u. n. 24 h bei RT* | | 26 | 26 | 27 | 26,5 | 28 | 24 | 29 | 26,5 |
| | $\varepsilon_B$   n. 5. Zyklus | % | 190 | 215 | 185 | 190 | 195 | 200 | 170 | 190 |
| | u. n. 24 h bei RT* | | 150 | 170 | 135 | 155 | 160 | 150 | 135 | 140 |
| | $\sigma_{100}$   n. 5. Zyklus | N/mm² | 5,5 | 5 | 6,5 | 5,5 | 6,5 | 5,0 | 7,5 | 6,0 |
| | u. n. 24 h bei RT* | | 15,0 | 14,5 | 15,0 | 14,5 | 15,5 | 14,0 | 19 | 14 |
| **Tropentest** | | | | | | | | | | |
| vor dem | Zugfestigkeit $\sigma_B$ | N/mm² | 33 | 31,5 | 35,5 | 33 | 34 | 34 | 37 | 35,5 |
| Test | Dehnung $\varepsilon_B$ | % | 180 | 195 | 165 | 180 | 185 | 180 | 170 | 170 |
| | $\sigma_{100}$-Spannung $\sigma_{100}$ | N/mm² | 15,5 | 16 | 16,5 | 15 | 14 | 13,5 | 17,5 | 15,5 |
| nach dem | $\sigma_B$   n.   1 d + 24 h bei RT* | N/mm² | 30 | 28,5 | 32,5 | 31,5 | 32 | 31,5 | 33,5 | 32,5 |
| Test | $\varepsilon_B$   n.   1 d + 24 h bei RT* | % | 190 | 210 | 180 | 190 | 195 | 200 | 180 | 190 |
| | $\sigma_{100}$   n.   1 d + 24 h bei RT* | N/mm² | 15 | 14,5 | 16 | 14 | 14 | 13,5 | 16,5 | 14 |
| | $\sigma_B$   n.   7 d + 24 h bei RT* | N/mm² | 29 | 27,0 | 30,5 | 29 | 29,5 | 29 | 29 | 27,5 |
| | $\varepsilon_B$   n.   7 d + 24 h bei RT* | % | 180 | 190 | 155 | 170 | 165 | 175 | 170 | 175 |
| | $\sigma_{100}$   n.   7 d + 24 h bei RT* | N/mm² | 14 | 13 | 17 | 15 | 15,5 | 14,5 | 17 | 14,5 |
| | $\sigma_B$   n. 14 d + 24 h bei RT* | N/mm² | 24,5 | 25 | 27,5 | 26 | 27 | 25,5 | 27 | 26 |
| | $\varepsilon_B$   n. 14 d + 24 h bei RT* | | 140 | 155 | 130 | 155 | 130 | 140 | 135 | 140 |
| | $\sigma_{100}$   n. 14 d + 24 h bei RT* | N/mm² | 18 | 17,0 | 19,5 | 18 | 19 | 18,5 | 18 | 17,5 |
| **Sterilisation** | | | | | | | | | | |
| Gewichtszunahme | | % | 1,7 | 1,8 | 1,6 | 1,9 | 1,8 | 1,8 | 1,9 | 1,8 |

\* RT = Raumtemperatur

Die Ergebnisse der Stabilitätsprüfungen — Waschlauge, Tropentest, Sterilisation — sind in der Tabelle 3 zusammengefasst. Die Haftung der Beschichtungsmassen auf vorbehandelten Glasflaschen und -platten (auch nach 5 Zyklen Waschlaugentest) war ausgezeichnet. Der Splitterschutz war in den Rezepturen mit einer Dehnung von ca. >150% gewährleistet. Je geringer die Dehnung der Folie (siehe auch Vergleichsbeispiele), desto geringer ist der Splitterschutz, d.h. die Splitter der berstenden Glasflaschen sind bis in einen Umkreis von >2 m zu finden. Die gleiche Beobachtung wurde gemacht, wenn die Dehnung zwar >150% ist, jedoch die Zugfestigkeit in etwa <28 N/mm² betrug.

Tabelle 3 zeigt die Waschlaugen, -tropen- und Sterilisationsbeständigkeit ausgewählter Beispiele aus den Tabellen 1 und 2.

Vergleichsbeispiel 1

Komponente A
384,87 Gewichtsteile Polyätherpolyol auf Basis von Äthylenoxid (OH–Z.: 108 mg KOH/g) linear
102,68 Gewichtsteile Polyätherpolyol auf Basis von Äthylenoxid (OH–Z.: 258 mg KOH/g) linear
102,0 Gewichtsteile Trimethylolpropan
2,0 Gewichtsteile Sn-octoat
1,0 Gewichtsteile Verlaufmittel analog den Beispielen 1–22

Komponente B
407,45 Gewichtsteile IPDI

Mechanische Eigenschaften
Zugfestigkeit 18,0 N/mm²
Dehnung 10%
Kein Splitterschutz gewährleistet.

Vergleichsbeispiel 2

Komponente A
225,12 Gewichtsteile Polytetramethylenäthergly-kol (OH–Z.: 173,5 mg KOH/g)
262,43 Gewichtsteile Polytetramethylenäthergly-kol (OH–Z.: 110,5 mg KOH/g)
102,0 Gewichtsteile Trimethylolpropan
2,0 Gewichtsteile Sn-octoat
1,0 Gewichtsteile Verlaufmittel analog Vergleichsbeispiel 1

Komponente B
407,45 Gewichtsteile IPDI

Mechanische Eigenschaften
Zugfestigkeit 35,0 N/mm²
Dehnung 160%
Im Falltest wurden geringfügig streuende Glassplitter beobachtet. Ausserdem zeigten die Folien nach dem Härtungsprozess eine deutliche Gelbfärbung und bereits nach 400 h Kurzbewitterung im Xenotest trat Versprödung auf und nach 650 h totale Zerstörung der Folie ein.

## Patentansprüche

1. Verfahren zum Beschichten von Glasoberflächen, insbesondere Glasflaschen, zur Verhinderung der Streuung von Glaspartikeln beim Bersten, mit einer transparenten, duroplastischen Schutzschicht von mehr als 50 µm durch Auftragen von Massen aus Polyisocyanaten und hydroxylgruppenhaltigen Verbindungen sowie üblicher Verarbeitungszusätze und Aushärten des Überzuges bei erhöhten Temperaturen, wobei man zunächst die reine Glasoberfläche mit einer wässrigen oder alkoholischen Silanschlichte behandelt und trocknet, dadurch gekennzeichnet, dass man anschliessend die so behandelte Glasoberfläche mit einer Masse aus aliphatischen und/oder cycloaliphatischen Diisocyanaten oder deren Umsetzungsprodukte mit Wasser im Molverhältnis von $2 : \leqq 1$ (Komponente B) und einem trifunktionellen, hydroxylgruppenhaltigen Polyester eines mittleren Molekulargewichtes von 300–1400 aus ω-Hydroxycarbonsäuren oder deren Lactonen mit mindestens 4 C-Atomen und Triolen beschichtet und härtet, wobei gegebenenfalls bis zu 90 Gew.-% des trifunktionellen Polyesters durch einen bifunktionellen Polyester gleichen Aufbaus aus Diolen mit einem mittleren Molekulargewicht von 400–2000 ersetzt sein können (Komponente A).

2. Verfahren nach Anspruch 1, dadurch gekennzeichnet, dass der trifunktionelle, hydroxylgruppenhaltige Polyester ein mittleres Molekulargewicht von 500–800 hat.

3. Verfahren nach Anspruch 2, dadurch gekennzeichnet, dass der bifunktionelle, hydroxylgruppenhaltige Polyester ein mittleres Molekulargewicht von 500–1200 hat.

4. Verfahren nach den Ansprüchen 1–3, dadurch gekennzeichnet, dass man Polyester und Polyisocyanate in solchen Mengen einsetzt, dass auf eine OH-Gruppe 0,8–1,2 Isocyanatgruppen kommen.

5. Verfahren nach Anspruch 4, dadurch gekennzeichnet, dass auf eine OH-Gruppe 0,95–1,1 Isocyanatgruppen kommen.

6. Verfahren nach den Ansprüchen 1–5, dadurch gekennzeichnet, dass man die beschichteten Glasflaschen bei einer Temperatur im Bereich von 150–240 °C der Härtung unterwirft.

7. Verfahren nach Anspruch 6, dadurch gekennzeichnet, dass man die Härtung bei Temperaturen im Bereich von 180–210 °C durchführt.

## Claims

1. A method for the coating of glass surfaces, especially glass bottles, in order to prevent the scattering of glass particles upon bursting, with a transparent, duroplastic protective coat of more than 50 µm by depositing substances of polyisocyanates and hydroxy group-containing compounds as well as usual processing additives; and hardening the overlay at elevated temperatures, wherein at first the clean glass surface is treated with an aqueous or an alcoholic silane skim coat, and dried, which comprises coating thereafter the so treated glass surface with a substance of aliphatic and/or cycloaliphatic diisocyanates or their reaction product with water is a mole ratio of 2:≦1 (component B) and a trifunctional, hydroxy group-containing polyester of an average molecular weight of 300–1400 derived from a $\omega$-hydroxy carboxylic acid or lactone therefrom, containing at least 4 C-atoms; and hardening said substance, wherein, if necessary, up to 90 wt.-% of the trifunctional polyester can be substituted by a bifunctional polyester of same structure from diols with an average molecular weight of 400–2000 (component A).

2. A method according to Claim 1, wherein said trifunctional, hydroxy group-containing polyester has an average molecular weight of 500–800.

3. A method according to Claim 1, wherein said bifunctional, hydroxy group-containing polyester has an average molecular weight of 500–1200.

4. A method according to Claims 1–3, wherein said polyesters and polyisocyanates are reacted in amounts such that 0,8–1,2 isocyanate groups react with one OH-group.

5. A method according to Claim 4, wherein one OH-group reacts with 0,95–1,1 isocyanate groups.

6. A method according to Claims 1–5, wherein said coated glass bottles are subjected to hardening at a temperature in the range of 150–240 °C.

7. A method according to Claim 6, wherein said hardening is carried out at a temperature in the range of 180–210 °C.

**Revendications**

1. Procédé pour revêtir des surfaces de verre, en particulier des bouteilles de verre, afin d'empêcher la dispersion de particules de verre au cours d'un éclatement, avec une couche protectrice transparente, thermodurcissable de plus de 50 $\mu$m d'épaisseur par application de masses de polyisocyanates et de composés contenant des groupes hydroxyl ainsi que les additifs d'opération courants, et durcissement du revêtement par élévation de la température, la surface du verre propre étant d'abord traitée avec une légère couche de silane aqueuse ou alcoolique puis séchée, procédé caractérisé en ce que l'on revêt ensuite la surface de verre ainsi traitée avec une masse constituée de diisocyanates aliphatiques et/ou cycloaliphatiques ou leurs produits de substitution avec de l'eau, dans le rapport de 2:≦1 (composant B), et un polyester contenant des groupes hydroxyl, tri-fonctionel, d'un poids moléculaire moyen de 300 à 1400 obtenu à partir d'acides hydroxycarboxyliques ou de leurs lactones contenant au moins 4 atomes de C, et de triols, puis durcit, une proportion pouvant aller jusqu'à 90% en poids du polyester tri-fonctionnel pouvant être remplacée par un polyester bi-fonctionnel de même structure et de diols, avec un poids moléculaire moyen de 400 à 2000 (composant A).

2. Procédé suivant la revendication 1, caractérisé en ce que le polyester tri-fonctionnel contenant des groupes hydroxyl a un poids moléculaire moyen de 500 à 800.

3. Procédé suivant la revendication 1, caractérisé en ce que le polyester bi-fonctionnel qui peut remplacer le polyester tri-fonctionnel a un poids moléculaire de 500 à 1200.

4. Procédé suivant l'une quelconque des revendications 1 à 3, caractérisé en ce que l'on met en œuvre les polyesters et les polyisocyanates dans des proportions telles qu'il existe, pour un groupe OH, 0,8 à 1,2 groupe isocyanate.

5. Procédé suivant la revendication 4, caractérisé en ce que, pour un groupe OH, il existe 0,95 à 1,1 groupe isocyanate.

6. Procédé suivant l'une quelconque des revendications 1 à 5, caractérisé en ce que l'on fait subir aux bouteilles de verre revêtues un durcissement à une température de l'ordre de 150 à 240 °C.

7. Procédé suivant la revendication 6, caractérisé en ce que l'on effectue le durcissement à une température de l'ordre de 180 à 210 °C.